# EUROPEAN PATENT APPLICATION

(11) **EP 0 567 671 A1**
(43) Date of publication of application: **03.11.1993**
(21) Application number: 92107176.7
(22) Date of filing: 28.04.1992
(51) Int. Cl.: C14C 3/32, C02F 9/00, C22B 34/32

(54) **Removal of chromium from chrome-tanned leather wastes**

(71) Applicant: Siska, Jozef, SL-811 03 Bratislava (SL)
(72) Inventor: Siska, Jozef, SL-811 03 Bratislava (SL)
(74) Representative: Kailuweit, Frank, Dr. Dipl.-Ing.

(57) **Abstract**

Chrome-tanned leather wastes in a form of shavings, trimmings and grindings is first mechanically treated by cutting. The cut leather material is washed in a leaching solution containing hydrogen peroxide and potassium carbonate and/or hydrogen carbonate and/or sodium carbonate and/or hydrogen carbonate. Washing takes place in stages, using a counter-flow method, at room temperature and with occasional stirring. The exhaused leaching solution is used to prepare chrome-tannig bath directly or after acidification using sulphuric acid. After washing, leather material is rinsed using rinsing water. Residues of chromium are removed from rinsing water by precipitation with ferrous sulphate, and the filtration sludges thus obtained can be added to the exhausted leaching solution and/or chrome-tanning bath. The washed leather material is dehydrated by pressing and wet collagen product is obtained.

## Description

The invention concerns removal of chromium from chrome-tanned leather wastes.

The method of the removal of chromium represents an effective way of processing wastes resulting from chrome-tanned leathers and consisting of shavings, trimmings and grindings. Effectiveness of this method lies in the separation of chromium from chromic leather material and the possibility of subsequent use of the separated components. The existing methods of the removal of chromium consist in alternative soaking of the chrome-tanned material in acid and alkaline baths containing hydrogen peroxide. Thus, invention SU 1 493 647 describes alternative treatment using solution of sulphuric acid, solution of sodium carbonate, and oxidizing treatment with hydrogen peroxide and solution of ammonium in the presence of ultrasound.

The currently proposed methods are unsatisfactory due to their time requirements increased collagen hydrolysis in high-acidity and high-alkalinity environment of the baths used, high consuption of chemicals and large quantity of waste solutions that must be further treated for chromium separation. The present invention aims at eliminating the above shortcomings through applying a wasteless chromium separation method with a new type of chromium separation bath.

According to the invention, these problems are solved by a preliminary mechanical treatment of chrome-tanned leather material followed by its washing - at a temperature ranging from 10 to 50°C and with occasional stirring - in a leaching solution containing 0.1 to 15 percentage by weight of hydrogen peroxide and 1 to 55 percentage by weight of potassium carbonate and/or potassium hydrogen carbonate and/or sodium carbonate and/or sodium hydrogen carbonate. After washing, the leather material is rinsed by rinsing water at a temperature ranging from 10 to 50°C.

The main advantage of the present method of the removal of chromium is that the leather material is stripped, in a wasteless and low energy-intensity manner, of chromium that is subsequently adjusted using a simple procedure into a form applicable in chrome tanning. The by-product is wet collagen material that may be then used, e.g., in furniture-making, photography or cosmetics production. Another advantage of the method of removal of chromium according to the present invention is also the possibility of a multiple repetition without organic material loss and with high chromium separation efficiency.

Chrome-tanned leather wastes are conveniently treated mechanically by cutting and/or grinding to particles of 1 to 2 mm.

Washing can he conveniently done in a leaching solution containing 5 to 10 percentage by weight of potassium cabronate and 0.5 to 3 percentage by weight of hydrogen peroxide at a temperature of 25 to 30°C.

It is convenient to use a multi-stage washing of leather material, i.e. a fresh leaching solution is used to wash leather material that has been washed at least once in a leaching solution that had been used in washing the previous batch of leather material.

It is convenient to rinse the leather material with rinsing water at least twice and, after each stage of washing and rinsing, the aqueous phase is separated from the leather material by pressing and/or centrifuging.

The exhausted leaching solution is used directly for the preparation of chrome-tanning bath and/or after adding sulphuric acid and reaching pH value of maximum 7.

An amount of 0.5 to 20 percentage by weight solution of ferrous sulphate is added to the used rinsing water to reach pH of 7 to 7.5, the precipitate thus formed is separated e.g. through filtration and the separated precipitate can be added to the exhausted leaching solution and/or solution used in the preparation of chrome-tanning bath. The purified rinsing water substitute in rinsing the next batch of washed leather material.

The example which follows explains the invention:

### Example

One kg of chrome-tanned leather waste with 1 to 1.3 percentage by weight of chromium in a form of shavings, trimmings and grindings is cut into material with mean size of particles of 1 to 2 mm, and the cut material is divided into three parts of approximately the same size (I, II, III). 3.5 liters of 10 % solution of potassium carbonate are prepared in a storage vessel. Part I of leather material is mixed with fresh leaching solution obtained through blending 1.5 l of 10 % solution of potassium carbonate and 60 ml of 30 % hydrogen peroxide. Leather material is washed for 40 minutes at a temperature of 25°C with occasional stirring of the mixture in 3 to 5-minute intervals. Stirring should be done vertically so as to disperse the floating leather material in the bath. After washing is finished, leaching solution is separated from the leather material using filtration cloth, and the separated solution is used, after adding 60 ml of 30 % hydrogen peroxide, for washing the next part of leather material (II). In washing part II of material, the same procedure as for part I is used, and the separated solution is used to wash, after adding 60 ml of 30 % hydrogen peroxide, also part III of material in the same way. The separated exhausted leaching solution left after washing part III of the leather material is acidified to pH 6 by adding 38 % sulphuric acid, and the resultant solution containing potassium dichromate can be used for the preparation of chrome-tanning bath. Part I of the material, washed for the first time, is mixed with the leaching solution prepared from 1 l of 10 % potassium carbonate and 60 ml of 30 % hydrogen peroxide, and washing takes place in the same way as for the first time. The leaching solution used is then re-used, after adding 60 ml of 30 % hydrogen peroxide, to wash part II of the material, and then part III. The partly exhausted leaching solution can be used to wash another batch of chrome-tanned waste and, after exhaustion, the solution can be acidified to a resultant solution of dichromate in the way described above. For the third time, parts I, II and III of the leather material are washed with leaching solution using the same way as described above. The partly exhausted leaching solution used in the last washing (of part III of the material) can be used for washing another batch of chrome-tanned leather waste. Washed parts I, II and III of the leather material are mixed together with 1 l of water, and the used rinsing water is pressed out from the leather material to the filters and stored in a vessel. Rinsing is repeated two more times in the same way as for the first time, and 10 % solution of ferrous sulphate is added to the used rinsing water until a pH of 7 is reached. The precipitate thus formed is filtered out, and the rinsing water can be used for the first rinsing of another batch of treated leather material. The filter cake may be added to the resultant solution of potassium dichromate. By pressing of the chromium-free leather material, a wet 20 to 40 % collagen product is obtained with chromium content of less than 50 mg/kg.

## Claims

1. Removal of chromium from chrome-tanned leather wastes characterised in that chrome-taned wastes are mechanically treating and washing with occasional stirring at a temperature of 10 to 50°C in a leaching solution containing 0.1 to 15 percentage by weight of hydrogen peroxide and 1 to 55 percentage by weight of potassium carbonate and/or potassium hydrogen carbonate and/or sodium carbonate and/or sodium hydrogen carbonate, the washed leather material is then rinsed with rinsing water at a temperature of 10 to 50 °C.

2. The removal of chromium as claimed in Claim 1 to which chrome-tanned leather wastes are mechanically treated by cutting and/or chipping and/or grinding to particles with mean size of 1 to 2 mm.

3. The removal of chromium as claimed in Claims 1 and 2 to which the mechanically treated chrome-tanned leather material is washed in a leaching solution containing 5 to 10 percentage by weight of potassium carbonate and 0.5 to 3 percentage by weight of hydrogen peroxide at a temperature of 25 to 30°C.

4. The removal of chromium as claimed in Claims 1 to 3 to which washing is done in stages by using fresh leaching solution to wash the leather material that has already been washed at least once in a leaching solution that had been used to wash the previous batch of leather material.

5. The removal of chromium as claimed in Claims 1 to 4 to which rinsing with rinsing water is done at least twice and after each stage of washing and rinsing, the aqueous phase is separated from the leather material by pressing and/or centrifuging.

6. The removal of chromium as claimed in Claims 1 to 5 to which the exhausted leaching solution is used directly for the preparation of chrome-tanning bath and/or after addition of sulphuric acid and reaching pH of maximum 7.

7. The removal of chromium as claimed in Claims 1 to 6 to which a 0.5 to 20 weight % solution of ferrous sulphate is added to the used rinsing water until a pH of 7 to 7.5 is reached and resulting precipitate is separated, e.g., through filtration, and the separated precipitate can be added to the exhausted leaching solution and/or solution used in preparation of chrome-tanning bath, and purified rinsing water can be used to prepare fresh leaching solutions and/or re-used as a substitute of fresh rinsing water for rinsing the next batch of washed leather material.
